(19) Europäisches Patentamt
European Patent Office
Office européen des brevets

(11) Veröffentlichungsnummer: **0 270 998**
**A2**

(12) # EUROPÄISCHE PATENTANMELDUNG

(21) Anmeldenummer: **87117863.8**

(22) Anmeldetag: **03.12.87**

(51) Int. Cl.[4]: **C08L 77/00**, C08L 65/00, C08L 71/00

(30) Priorität: **04.12.86 DE 3641497**

(43) Veröffentlichungstag der Anmeldung:
**15.06.88 Patentblatt 88/24**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32a**
**D-6700 Ludwigshafen(DE)**
Erfinder: **Seiler, Erhard, Dr.**
**Erpolzheimer Strasse 1**
**D-6700 Ludwigshafen(DE)**

(54) **Thermoplastische Formmassen auf der Basis von Polyamiden und Polyaryletherketonen.**

(57) Thermoplastische Formmassen, enthaltend als wesentliche Komponenten,

A) 2 bis 97,9 Gew.% eines Polyamids
B) 2 bis 97,9 Gew.% eines Polyaryletherketons
C) 0,1 bis 30 Gew.% einer polymeren Komponente mit Hydroxylgruppen

sowie darüber hinaus

D) 0 bis 50 Gew.% eines schlagzäh modifizierenden Kautschuks und
E) 0 bis 60 Gew.% faser-und/oder teilchenförmige Füllstoffe.

EP 0 270 998 A2

D

BASF Aktiengesellschaft O.Z. 0050/38830

# Thermoplastische Formmassen auf der Basis von Polyamiden und Polyaryletherketonen

## Beschreibung

Die Erfindung betrifft thermoplastische Formmassen, enthaltend als wesentliche Komponenten,

A) 2 bis 97,9 Gew.% eines Polyamids
B) 2 bis 97,9 Gew.% eines Polyaryletherketons
C) 0,1 bis 30 Gew.% einer polymeren Komponente mit Hydroxylgruppen

sowie darüber hinaus

D) 0 bis 50 Gew.% eines schlagzäh modifizierenden Kautschuks und
E) 0 bis 60 Gew.% faser- und/oder teilchenförmige Füllstoffe

Weiterhin betrifft die Erfindung die Verwendung derartiger Formmassen zur Herstellung von Formkörpern und die aus den Formmassen erhältlichen Formkörper.

Polyaryletherketone sind teilkristalline Polymere mit hervorragenden Eigenschaften, insbesondere Spannungsrißbeständigkeit, Hochtemperaturbeständigkeit, Abriebfestigkeit und Zähigkeit. Ein Problem ist jedoch die Verarbeitung, die bei Temperaturen im Bereich von 400°C erfolgen muß.

Polyamide zeichnen sich durch gute mechanische Eigenschaften aus, die jedoch insgesamt das Niveau von Polyaryletherketonen nicht erreichen. Die Verarbeitung von Polyamiden ist jedoch wesentlich einfacher als bei Polyaryletherketonen.

Es war deshalb die technische Aufgabe gestellt, thermoplastische Formmassen aus Polyamiden und Polyaryletherketonen zur Verfügung zu stellen, die sich durch gute mechanische Eigenschaften, insbesondere Schlagzähigkeit, Biegefestigkeit, Reißfestigkeit und Elastizitätsmodul auszeichnen und darüber hinaus eine gute Lösungsmittelbeständigkeit und geringe Anfälligkeit gegenüber Spannungsrißkorrosion aufweisen. Außerdem sollten die Formmassen besser verarbeitbar sein als Polyaryletherketone.

Diese Aufgabe wird erfindungsgemäß durch die eingangs definierten thermoplastischen Formmassen gelöst.

Bevorzugte Massen dieser Art sind den Unteransprüchen zu entnehmen.

Als Komponente A enthalten die erfindungsgemäßen thermoplastischen Formmassen ein Polyamid oder Mischungen aus mehreren Polyamiden. Geeignet sind grundsätzlich teilkristalline und amorphe Polyamide, es werden jedoch teilkristalline Polyamide bevorzugt, da die daraus hergestellten Formmassen in der Regel solchen aus amorphen Polyamiden hinsichtlich der Wärmeform- und Spannungsrißbeständigkeit überlegen sind. Erfindungsgemäß einsetzbare Polyamide sind an sich bekannt und umfassen z.B. Polyamide mit Molekulargewichten von 5000 oder mehr, wie sie z.B. in den amerikanischen Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure mit 4 bis 12 Kohlenstoffatomen, mit einem Diamin, welches 4 bis 14 Kohlenstoffatome aufweist, hergestellt werden, oder durch Kondensation von Ω-Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung Polyamide u verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,0 bis 5 auf, bestimmt an einer 1 gew.%igen Lösung in $H_2SO_4$ bei 23°C, was einem Molekulargewicht (Gewichtsmittelwert) von etwa 15000 bis 45000 entspricht. Selbstverständlich können auch Mischungen von Polyamiden eingesetzt werden.

Der Anteil des Polyamids A an den erfindungsgemäßen Formmassen beträgt bis 97,9 Gew.%, bezogen auf das Gesamtgewicht. Formmassen mit einem Gehalt von 10 bis 78, insbesondere 20 bis 67 Gew.% an Polyamid werden besonders bevorzugt.

Als Komponente B enthalten die erfindungsgemäßen Formmassen ein Polyaryletherketon oder eine Mischung mehrerer Polyaryletherketone. Unter Polyaryletherketon sind hierbei Homo- und Copolykondensate zu verstehen, die

an aromatische Reste gebundene Carbonylgruppen in der Hauptkette enthalten und deren sich wiederholende Einheiten über Etherbrücken verknüpft sind.

Bevorzugt werden Polyaryletherketone mit wiederkehrenden Einheiten der allgemeinen Formeln I bis V eingesetzt,

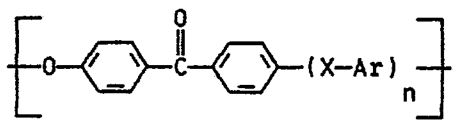

(I)

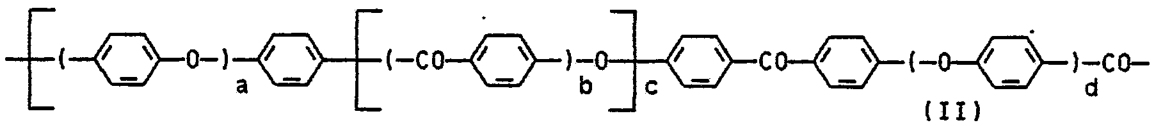

(II)

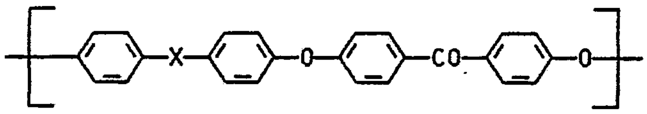

(III)

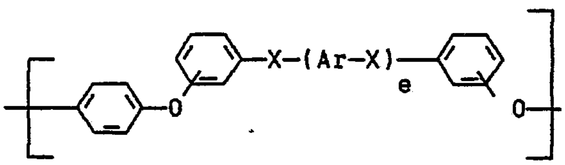

(IV)

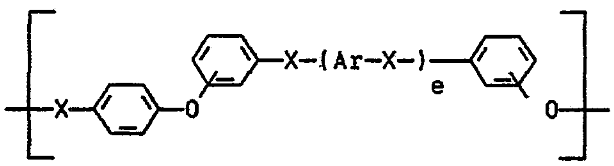

(V)

wobei
Ar Phenylen, Diphenylen oder Naphthylen sein kann,
X O, -CO- oder eine direkte chemische Bindung darstellt,
a eine ganze Zahl zwischen 1 und 4 ist und
b, c, d und e jeweils den Wert 0 oder 1 haben können.

Alle aromatischen Einheiten in den allgemeinen Formeln I bis V können mit $C_1$-$C_8$-Alkylgruppen, $C_1$-$C_8$-Alkoxygruppen Cl oder F substituiert sein.

Von den unter die Formeln I bis V fallenden Polyaryletherketonen werden solche mit den folgenden wiederkehrenden Einheiten besonders bevorzugt:

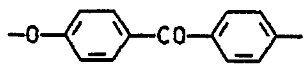

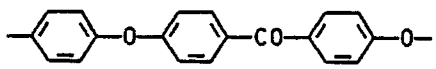

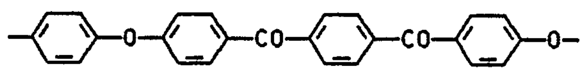

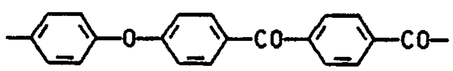

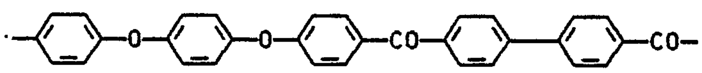

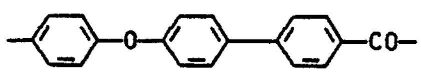

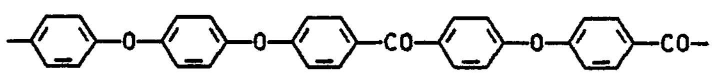

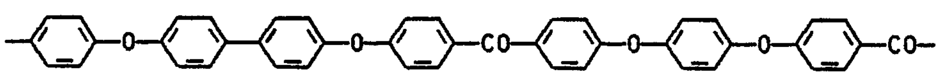

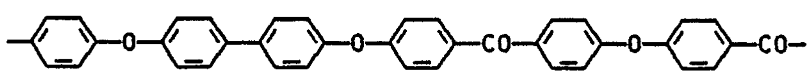

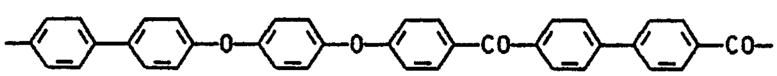

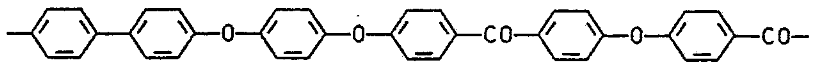

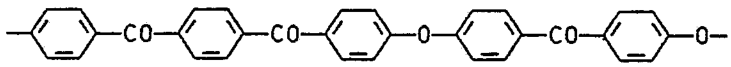

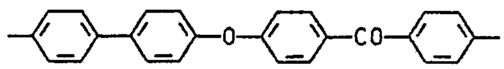

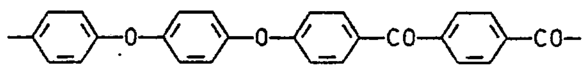

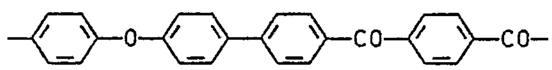

Neben den Etherketonbausteinen können die in den erfindungsgemäßen Formmassen eingesetzten Polyaryletherketone noch Aryletherstrukturen enthalten, wie sie z.B. aus Polyarylethersulfonen bekannt sind. Hier seien als Beispiele genannt

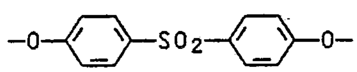

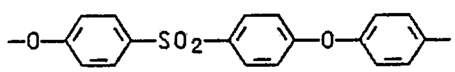

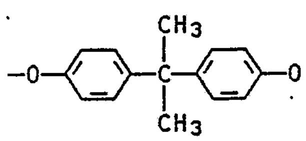

Weitere Einheiten sind z.B. in der DE-OS 30 14 230 beschrieben. Der Anteil derartiger Einheiten beträgt im allgemeinen bis zu 50 mol%, insbesondere bis zu 40 mol%, bezogen auf die Gesamtzahl der wiederkehrenden Einheiten in den Polyaryletherketonen.

Die Herstellung derartiger Polyaryletherketone ist an sich bekannt und in der Literatur, z.B. der DE-AS 15 45 106, DE-OS 19 57 091, DE-OS 27 31 816, der CA-PS 847 963 und der bereits erwähnten DE-OS 30 14 230 beschrieben, so daß sich hier nähere Angaben erübrigen. Es sei nur erwähnt, daß grundsätzlich die nukleophile Polykondensation von Dihydroxy- mit Dihalogenverbindungen als auch elektrophile Herstellungsverfahren (Friedel-Crafts-Acylierung) geeignet sind.

Derartige aromatische Polyaryletherketone weisen im allgemeinen Molekulargewichte (Gewichtsmittelwerte) von 10.000 bis 100.000, vorzugsweise von 15.000 bis 50.000 und Grenzviskositäten (gemessen bei 25°C in 1 gew.%iger Lösung in 96 Gew.% $H_2SO_4$ von 0,4 bis 1,6, vorzugsweise von 0,8 bis 1,4 auf.

Der Gehalt der erfindungsgemäßen Formmassen an der Komponente B beträgt wie der der Komponente A 2 bis 97,9 Gew.%; Gehalte von 20 bis 88, insbesondere 30 bis 75 Gew.% B, bezogen auf das Gesamtgewicht der Komponenten A bis E werden bevorzugt.

Als wesentliche Komponente C enthalten die erfindungsgemäßen Formmassen eine polymere Komponente mit Hydroxylgruppen. Die durchgeführten Versuche ergaben, daß prinzipiell jede Gruppe mit Protonendonatoreigenschaften geeignet sein sollte, daß sich jedoch Gruppen mit der Struktureinheit -OH besonders gut eignen. Die verträglichkeitsverbessernde Wirkung der Komponente C beruht aller Wahrscheinlichkeit nach darauf, daß zwischen der Komponente C und den Komponenten A und B Wechselwirkungen, zum Beispiel H-Brückenbindungen auftreten, die eine bessere Haftung der Phasen aneinander bewirken.

Wie bereits erwähnt, sind prinzipiell alle Polymere mit im wesentlichen frei zur Verfügung stehenden Hydroxylgruppen geeignet. Es ist natürlich darauf zu achten, daß die Komponenten A und B gegenüber der Komponente C stabil sind. Dies ist insbesondere bei Verwendung von Verbindungen mit sauren -OH-Gruppen zu beachten.

Unter Beachtung dieser Voraussetzungen haben sich einige Gruppen von Verbindungen als besonders vorteilhaft herausgestellt, die nachfolgend beschrieben werden. Es ist jedoch grundsätzlich möglich, auch andere Komponenten C einzusetzen, solange die Stabilität der Komponenten A und B nicht darunter leidet.

Die erste Gruppe besonders geeigneter Polymerer sind Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Grundsätzlich sind aliphatische oder aromatische Diole geeignet. Besonders bevorzugte Dihydroxiverbindungen sind die für die Herstellung von Polycarbonaten eingesetzten Diole.

Wegen der leichten Zugänglichkeit wird ein Polykondensat aus Bisphenol A und Epichlorhydrin mit der Struktur

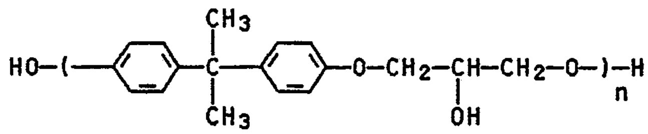

bevorzugt verwendet.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymere als Pfropfgrundlagen geeignet sind, die mit den Komponenten A und B nicht vollkommen unverträglich sind. Ein gewisser Grad an Unverträglichkeit kann durch eine Erhöhung des Anteils der Hydroxylgruppen ausgeglichen werden.

Geeignete Komponenten C sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere mit den Komponenten A) und B) ist. Je besser die Verträglichkeit, desto geringer kann der Anteil der OH-Gruppen sein. Aus dem Vorstehenden ergibt sich, daß eine Vielzahl von Polymeren als Komponente C geeignet sind, von denen nachfolgend nur als Beispiel einige besonders bevorzugte Arten näher vorgestellt werden.

Die erste Gruppe sind Polymere und Copolymere mit einem Gehalt von bis zu 100 Mol.% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien die Polymeren aus Vinylphenolen und Copolymeren der vorstehend erwähnten Basispolymeren mit Vinylphenolen genannt, die im Kern auch Substituenten enthalten können. Substituenten, die die Acidität des phenolischen Wasserstoffs erhöhen,

sind besonders geeignet, so z.B. Halogensubstituenten, aber auch andere elektronenanziehende Substituenten.

Als dritte Gruppe seien die Phenol-Formaldehyd-Polykondensate genannt, soweit sie unvernetzt und löslich sind. Diese Produkte können linear oder verzweigt sein.

Daneben sind grundsätzlich Polymere und Copolymere mit allen polymerisierbaren oder pfropfbaren Alkoholen zu nennen.

Es sei erwähnt, daß Polymere mit OH-Hydroxylgruppen auf der Basis von Polyamiden oder Polyaryletherketonen besonders bevorzugt sind, da hier die Verträglichkeit mit mindestens der Komponente A oder B von vornherein gegeben ist, so daß der Anteil der OH-Gruppen gesenkt werden kann.

Die Herstellung der Komponente C kann nach üblichen Verfahren zur Polykondensation bzw. Pfropf- oder Copolymerisation erfolgen, weshalb sich hier nähere Angaben erübrigen.

Der Anteil der Komponente C an den erfindungsgemäßen Formmassen liegt im Bereich von 0,1 bis 30 Gew.%, bezogen auf das Gesamtgewicht der Komponenten A bis E und hängt von der Verträglichkeit des Basispolymeren mit den Komponenten A und B ab. Im allgemeinen haben sich Anteile von 1 bis 25, insbesondere von 3 bis 20 Gew.% als besonders vorteilhaft herausgestellt.

Neben den Komponenten A bis C können die erfindungsgemäßen Formmassen als Komponente D zur Verbesserung der Schlagzähigkeit schlagzäh modifizierende Kautschuke enthalten. Schlagzähigkeitsverbessernde Elastomere (Kautschuke) für Polyamide sind dem Fachmann an sich bekannt. Als schlagzäh modifizierende Kautschuke sind prinzipiell solche verwendbar, die die erforderlichen Verarbeitungstemperaturen weitgehend ohne Zersetzung überstehen.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-kautschuke zu nennen, die vorzugsweise ein Verhältnis von Ethylenresten zu Propylenresten im Bereich von 20:80 bis 80:20 aufweisen.

Die Mooney-Viskositäten (MLI+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Buta-1,4-dien, Hexa-1,4-dien, Hexa-1,5-dien, 2,5-Dimethyl-hexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methylallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen oder freie Säuregruppen enthalten. Diese Epoxygruppen werden vorzugsweise durch Zugabe von Epoxygruppen enthaltenden Monomeren der allgemeinen Formeln II oder III zum Monomerengemisch in den Kautschuk eingebaut

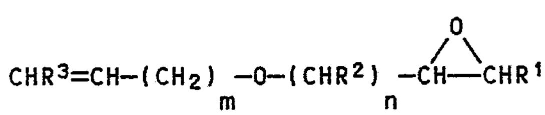 (II)

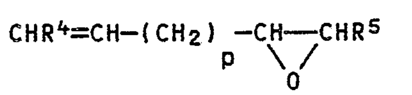 (III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel II sind Epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | |
|---|---|
| 50 bis 98, insbesondere 60 bis 95 Gew.% | Ethylen, |
| 1 bis 40, insbesondere 2 bis 20 Gew.% | Glycidylacrylat und/oder Glycidylmethacrylat, |
| 1 bis 45, insbesondere 10 bis 35 Gew.% | n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Anstelle der Ester können auch Acryl- und/oder Methacrylsäure selbst verwendet werden.

Daneben können auch Vinylester und Vinylether als Comonomere eingesetzt werden.

Schließlich sind als weitere bevorzugte Comonomere noch Maleinsäureanhydrid und dessen Derivate zu nennen.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Als Kautschuk D können auch Pfropfpolymerisate aus

25 bis 98 Gew.% eines Acrylatkautschuks mit einer Glasübergangstemperatur von unter -20°C als Pfropfgrundlage

und

2 bis 75 Gew.% eines copolymerisierbaren ethylenisch ungesättigten Monomeren, dessen Homo- bzw. Copolymerisate eine Glasübergangstemperatur von mehr als 25°C aufweisen, als Pfropfauflage

eingesetzt werden.

Die Pfropfgrundlage sind Acrylat- bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256, der DE-A-24 44 584 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke D weisen vorzugsweise eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten Kautschuktypen eingesetzt werden können.

Als verstärkend wirkende Füllstoffe seien beispielsweise Asbest, Kohlenstoff- und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 200 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen.

Andere geeignete Füllstoffe sind z.B. Wollastonit, Calciumcarbonat, Glaskugeln, Quarzmehl, Si- und Bornitrid, amorphe Kieselsäure, Asbest, Calciummetasilicat, Magnesiumcarbonat, Kaolin, Glimmer und Feldspat oder Mischungen dieser Füllstoffe.

Von den vorstehend genannten verstärkenden Füllstoffen haben sich insbesondere Glasfasern als vorteilhaft herausgestellt, besonders dann, wenn eine sehr hohe Wärmeformbeständigkeit gefordert ist.

Der Anteil der Komponente E beträgt 0 bis 60, vorzugsweise 2 bis 50 und insbesondere 5 bis 30 Gew.%, bezogen auf das Gesamtgewicht der Formmassen.

Neben den Komponenten A bis E können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A bis E.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A bis E angewandt werden.

Die Herstellung der erfindungsgemäßen Formmassen kann nach an sich bekannten Mischverfahren z.B. durch Einarbeiten des Polyaryletherketone in das Polyamid bei Temperaturen oberhalb des Schmelzpunkts des Polyaryletherketons erfolgen, insbesondere bei Temperaturen von 320 bis 400°C, besonders bei 330 bis 380°C, in üblichen Mischvorrichtungen, wie Extrudern, Knetern und Mischern. Die Komponenten D und E, die gegebenenfalls enthalten sind, werden entsprechend zugegeben.

Aus den erfindungsgemäßen Formmassen lassen sich leicht Formkörper mit guter Oberflächenbeschaffenheit und verbesserter Schlagzähigkeit bei

hoher Steifigkeit, insbesondere bei tiefen Temperaturen, herstellen. Weder im Formörper noch in der Schmelze tritt eine Entmischung der Polymerkomponenten ein.

Beispiele

Zur Herstellung von erfindungsgemäßen thermoplastischen Formmassen wurden folgende Ausgangsstoffe eingesetzt.

Komponente A (Polyamide):

A1: Polyhexamethylenadipinamid mit einer relativen Viskosität von 3,31, gemessen an einer 1 %igen Lösung in 96 % $H_2SO_4$ bei 25°C

A2: Polycaprolactam mit einer relativen Viskosität von 4,0 (gemessen wie bei A 1)

A3: Polyhexamethylensebacinsäureamid mit einer relativen Viskosität von 3,23 (gemessen wie bei A 1)

A4: Polyamid, hergestellt aus Hexamethylendiamin und einem Gemisch aus Isophthalsäure und Terephthalsäure (Gew.-Verh. 60/40) mit einer relativen Viskosität von 1,91 gemessen an einer 1 gew.%igen Lösung in konzentrierter Schwefelsäure bei 25°C.

Komponente B

B1: Polyaryletherketon mit wiederkehrenden Einheiten

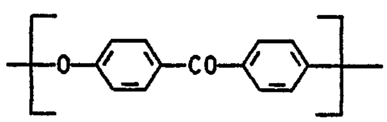

mit einer Grenzviskosität [$\eta$] = 1,2 dl/g, gemessen in 1 gew.%iger Lösung in 96 gew.%iger Schwefelsäure bei 25°C.

B2: Polyaryletherketon mit wiederkehrenden Einheiten

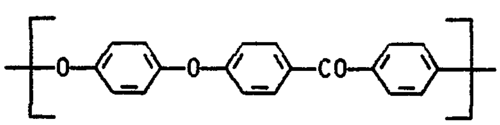

mit einer Grenzviskosität [η] 0,9 dl/g (gemessen wie bei B 1).

Komponente C:

C: Polykondensat aus 2,2-Di-(4-Hydroxyphenyl)propan und Epichlorhydrin (Phenoxy™, Union Carbide) mit einer relativen Viskosität von 1,13, gemessen in 0,5 gew.%iger Lösung in Dichlormethan bei 25°C.
Struktur:

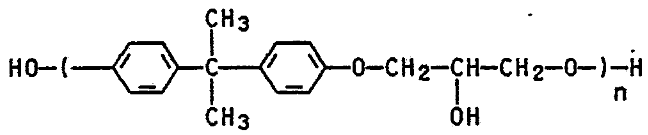

Komponente D:

Zur Verbesserung der Schlagzähigkeit wurden folgende Kautschuke eingesetzt:

D1: Pfropfkautschuk mit einer Pfropfgrundlage (75 Gew.%) aus Poly-n-Butylacrylat, das mit Butandioldiacrylat umgesetzt wurde und einer Pfropfhülle (25 Gew.%) eines Copolymeren aus Styrol und Acrylnitril (Gew.-Verh. 75:25) hergestellt durch Emulsionspolymerisation in an sich bekannter Weise. (Mittlere Teilchengröße $d_{50}$ = 250 nm)

D2: Terpolymeres aus Ethylen, n-Butylacrylat und Acrylsäure (Gew.-Verh. 65/30/5) hergestellt durch Hochdruckpolymerisation in bekannter Weise. (MFI = (Schmelzindex) 10 g/10 min (190°C, 2,16 kg))

Der mittlere Teilchendurchmesser $d_{50}$ ist der Durchmesser, ober- und unterhalb dessen die Durchmesser von jeweils 50 Gew.% der Teilchen liegen.

Die Formmassen wurden hergestellt indem die Komponenten intensiv gemischt, in einem Zweischneckenextruder bei 350°C aufgeschmolzen, homogenisiert und in ein Wasserbad extrudiert wurden. Nach Granulierung und Trocknung wurde die Mischung auf einer Spritzgußmaschine zu Prüfkörpern geformt und diese ohne weitere Nachbehandlung untersucht.

Die Zugfestigkeit wurde an Zugstäben nach DIN 53 455 bestimmt, die Wärmeformbeständigkeit an Flachstäben nach ASTM ISO 75, Methode A.

Die Lochkerbschlagzähigkeit wurde nach DIN 53753 bestimmt.

Die Ergebnisse sind in Tabelle 1 und 2 mit der Zusammensetzung der einzelnen Formmassen aufgeführt (alle %-Angaben beziehen sich auf das Gewicht). Dabei zeigt Tabelle 2, daß durch Kautschukmodifikation die Zähigkeit der Formmassen nochmals beträchtlich angehoben werden kann, insbesondere bei tiefen Temperaturen.

Tabelle 1 (alle Mengenangaben in Gew.%)

| Beispiel Nr. | Komponente A | Komponente B | Komponente C | Zugfestigkeit [N/mm²] | Lochkerbschlagzähigkeit kJ/m² +23° C | Lochkerbschlagzähigkeit kJ/m² -40° C |
|---|---|---|---|---|---|---|
| 1V[1] | 50 $A_1$ | 50 $B_1$ | - | 92 | 5 | 3 |
| 2V | 50 $A_1$ | 50 $B_2$ | - | 91 | 6 | 3 |
| 3V | 50 $A_2$ | 50 $B_2$ | - | 88 | 7 | 3 |
| 4V | 50 $A_3$ | 50 $B_2$ | - | 85 | 10 | 3 |
| 5V | 50 $A_4$ | 50 $B_2$ | - | 94 | 4 | 3 |
| 6 | 45 $A_1$ | 45 $B_1$ | 10 | 91 | 55 | 43 |
| 7 | 45 $A_1$ | 45 $B_2$ | 10 | 91 | 61 | 45 |
| 8 | 45 $A_2$ | 45 $B_2$ | 10 | 89 | 78 | 58 |
| 9 | 45 $A_3$ | 45 $B_2$ | 10 | 87 | 102 | 63 |
| 10 | 45 $A_4$ | 45 $B_2$ | 10 | 98 | 52 | 26 |

1 Vergleichsbeispiel

Tabelle 2 (alle Mengenangaben in Gew.%)

| Beispiel Nr. | Komponente A | Komponente B | Komponente C | Komponente D | Lochkerbschlagzähigkeit $kJ/m^2$ 23°C | -40°C |
|---|---|---|---|---|---|---|
| 11 | 45 $A_2$ | 45 $B_1$ | 5 | 5 $D_2$ | 92 | 66 |
| 12 | 45 $A_2$ | 45 $B_2$ | 5 | 5 $D_2$ | 95 | 78 |
| 13 | 45 $A_1$ | 45 $B_2$ | 5 | 5 $D_1$ | 92 | 69 |
| 14 | 45 $A_3$ | 45 $B_2$ | 5 | 5 $D_2$ | 106 | 89 |
| 15 | 42 $A_2$ | 42 $B_2$ | 6 | 10 $D_1$ | 104 | 92 |
| 16 | 42 $A_4$ | 42 $B_2$ | 6 | 10 $D_1$ | 84 | 61 |

Patentansprüche

1. Thermoplastische Formmassen, enthaltend als wesentliche Komponenten,

A) 2 bis 97,9 Gew.% eines Polyamids
B) 2 bis 97,9 Gew.% eines Polyaryletherketons
C) 0,1 bis 30 Gew.% einer polymeren Komponente mit Hydroxylgruppen

sowie darüber hinaus

D) 0 bis 50 Gew.% eines schlagzäh modifizierenden Kautschuks und
E) 0 bis 60 Gew.% faser- und/oder teilchenförmige Füllstoffe.

2. Thermoplastische Formmassen nach Anspruch 1, dadurch gekennzeichnet, daß der Gehalt an

E) verstärkenden Füllstoffen 2 bis 50 Gew.%

beträgt.

3. Verwendung der thermoplastischen Formmassen gemäß den Ansprüchen 1 und 2 zur Herstellung von Formkörpern.

4. Formkörper, enthaltend als wesentliche Komponenten Formmassen gemäß den Ansprüchen 1 und 2.

Lf